# EUROPEAN PATENT APPLICATION

(11) **EP 2 489 940 A2**
(43) Date of publication of application: **22.08.2012**
(21) Application number: 12155000.8
(22) Date of filing: 10.02.2012
(51) Int. Cl.: F23R 3/28

(54) **Combustor and method for introducing a secondary fluid into a fuel nozzle**

(30) Priority: 15.02.2011 US 201113027815
(71) Applicant: General Electric Company, Schenectady, New York 12345 (US)
(72) Inventor: Kraemer, Gilbert Otto, Greenville, SC South Carolina 29615 (US); Berry, Jonathan Dwight, Greenville, SC South Carolina 29615 (US); Popovic, Predrag, Greenville, SC South Carolina 29615 (US)
(74) Representative: Cleary, Fidelma

(57) **Abstract**

A combustor (20) is disclosed that includes a baffle plate (52) and a fuel nozzle (30) extending through the baffle plate (52). The combustor (20) may also include a shroud (84) extending from the baffle plate (52) and surrounding at least a portion of the fuel nozzle (30). A passage (56) may be defined between the shroud (84) and an outer surface (81) of the fuel nozzle (30) for receiving a first fluid (68). Additionally, the passage may be sealed from a second fluid (70) flowing adjacent to the shroud (84).

## Description

### FIELD OF THE INVENTION

The present subject matter relates generally to gas turbines and, more particularly, to a combustor arrangement for introducing a secondary fluid into a fuel nozzle without diluting the secondary fluid with the compressor discharge fluid flowing through the combustor.

### BACKGROUND OF THE INVENTION

Gas turbines typically include a compressor section, a combustion section, and a turbine section. In conventional turbine applications, the compressor section pressurizes air flowing into the gas turbine. The pressurized air discharged from the compressor section flows into the combustion section, which is generally characterized by a plurality of combustors disposed in an annular array about the axis of the engine. Specifically, the pressurized air flows along a combustion liner of each combustor and is directed into the combustor's fuel nozzles through one or more inlets or openings defined in the nozzles. The air is then mixed with fuel and the mixture is injected into and burned within the combustion chamber of each combustor. The hot gases of combustion then flow from the combustion section to the turbine section, wherein energy is extracted from the gases to drive the turbine and generate power.

In other turbine applications, the compressor discharge fluid or working fluid of the combustor may comprise a fluid other than air. For example, in oxy-fuel or stoichiometric exhaust gas recirculation (SEGR) applications, the compressor discharge fluid may comprise an oxygen deficient fluid. As such, it is often desirable to introduce one or more secondary fluids having a higher oxygen content than the compressor discharge fluid into each combustor to increase the combustion efficiency. However, due to the conventional arrangement of a combustor, the secondary fluid(s) must typically be injected into the combustion chamber at locations other than at the fuel nozzles (e.g., as one or more cross-mixing flows injected through the combustion liner) to prevent such fluid(s) from being diluted by the compressor discharge fluid flowing adjacent to the fuel nozzles. As a result, a substantial portion of the oxygen contained within the secondary fluid(s) exits the combustion section unburned, thereby increasing the amount of harmful emissions generated by the gas turbine.

Accordingly, a combustor arrangement for introducing a secondary fluid into a fuel nozzle without diluting the secondary fluid with the compressor discharge fluid flowing through the combustor would be welcomed in the technology.

### BRIEF DESCRIPTION OF THE INVENTION

Aspects and advantages of the invention will be set forth in part in the following description, or may be obvious from the description, or may be learned through practice of the invention.

In one aspect, the invention resides in a combustor including a baffle plate and a fuel nozzle extending through the baffle plate. The combustor may also include a shroud extending from the baffle plate and surrounding at least a portion of the fuel nozzle. A passage may be defined between the shroud and an outer surface of the fuel nozzle for receiving a first fluid. Additionally, the combustor may include means for sealing the passage from a second fluid flowing adjacent to the shroud.

In a further aspect, the invention resides in a method for introducing an undiluted fluid into a fuel nozzle of a combustor. The method generally includes supplying a first fluid through a passage defined between an outer surface of the fuel nozzle and a shroud surrounding at least a portion of the fuel nozzle and preventing a second fluid flowing adjacent to the shroud from entering the passage.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

Embodiments of the present invention will now be described, by way of example only, with reference to the accompanying drawings in which:
FIG. 1 illustrates a simplified, block diagram of one embodiment of a gas turbine in accordance with aspects of the present subject matter;
FIG. 2 illustrates a cross-sectional side view of one embodiment of a combustor in accordance with aspects of the present subject matter;
FIG. 3 illustrates a perspective view of one embodiment of an end cover assembly of the combustor shown in FIG. 2;
FIG. 4 illustrates a partial, cross-sectional view of the combustor shown in FIG. 2, particularly illustrating one embodiment of a sealing mechanism for sealing a fluid passage of the combustor from the flow of compressor discharge fluid in accordance with aspects of the present subject matter;
FIG. 5 illustrates a cross-sectional view of a portion of the combustor shown in FIG. 4 taken along a centerline of a fuel nozzle of the combustor.
FIG. 6 illustrates a partial, cross-sectional view of the combustor shown in FIG. 2 taken along a centerline of a fuel nozzle of the combustor, particularly illustrating another embodiment of a sealing mechanism for sealing a fluid passage of the combustor from the flow of compressor discharge fluid in accordance with aspects of the present subject matter;
FIG. 7 illustrates a partial, cross-sectional view of the combustor shown in FIG. 2 taken along a centerline of a fuel nozzle of the combustor, particularly illustrating a further embodiment of a sealing mechanism for sealing a fluid passage of the combustor from the flow of compressor discharge fluid in accordance with aspects of the present subject matter;
FIG. 8 illustrates a partial, cross-sectional view of the combustor shown in FIG. 2 taken along a centerline of a fuel nozzle of the combustor, particularly illustrating yet another embodiment of a sealing mechanism for sealing a fluid passage of the combustor from the flow of compressor discharge fluid in accordance with aspects of the present subject matter; and
FIG. 9 illustrates a partial, cross-sectional view of the combustor shown in FIG. 2 taken along a centerline of a fuel nozzle of the combustor, particularly illustrating an even further embodiment of a sealing mechanism for sealing a fluid passage of the combustor from the flow of compressor discharge fluid in accordance with aspects of the present subject matter.

### DETAILED DESCRIPTION OF THE INVENTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

In general, the present subject matter is directed to a combustor arrangement that permits a secondary fluid to be directed around and introduced into one or more of the fuel nozzles of the combustor without dilution of such secondary fluid by the compressor discharge fluid (e.g., air or an oxygen deficient fluid) flowing through the combustor. In particular, the combustor may include a shroud surrounding at least a portion of each fuel nozzle so as to defme a passage between the shroud and the outer perimeter of the fuel nozzle. Additionally, the combustor may include means for sealing the passage from the compressor discharge fluid flowing around and/or adjacent to the shroud. For example, in several embodiments, a sealing mechanism, such as a floating collar seal, may be disposed between the shroud and another component of the combustor (e.g., the fuel nozzle or a combustion liner cap) in order to prevent the compressor discharge fluid from entering the passage. As such, a sealed passage may be provided along the exterior of the fuel nozzle for introducing an undiluted secondary fluid into the fuel and other fluids supplied through and/or exiting the fuel nozzle.

In several embodiments of the present subject matter, the secondary fluid may comprise an oxygen containing fluid (e.g., a pure oxygen flow) having a differing oxygen content than the compressor discharge fluid. As such, in one embodiment, the disclosed turbine may include an oxy-fuel combustion system, wherein the oxygen containing fluid flowing around the outer perimeter of the fuel nozzle is introduced into the fuel (e.g., natural gas) and/or other fluids (e.g., an inert carbon dioxide containing fluid) directed through the fuel nozzles. By introducing oxygen into the fuel and other fluids at the fuel nozzle, it has been found that the amount of unburned oxygen discharged from the turbine may be reduced, thereby decreasing the amount of emissions generated by the turbine. Thus, the present disclosure may be particularly advantageous for low oxygen discharge applications, such as near stoichiometric exhaust gas recirculation (SEGR) where the compressor discharge fluid may be less than 1 % oxygen by volume. However, it should be appreciated that the present subject matter need not be limited to such applications, but may generally be applicable to any suitable combustion system.

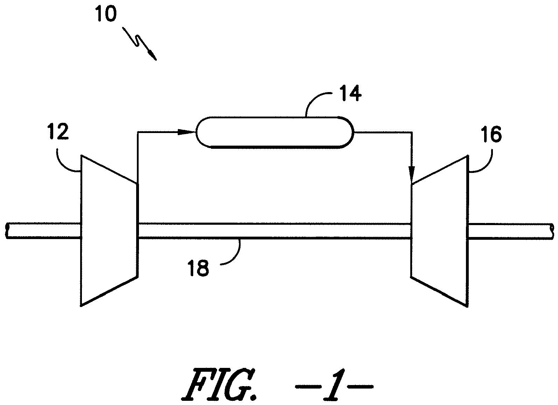

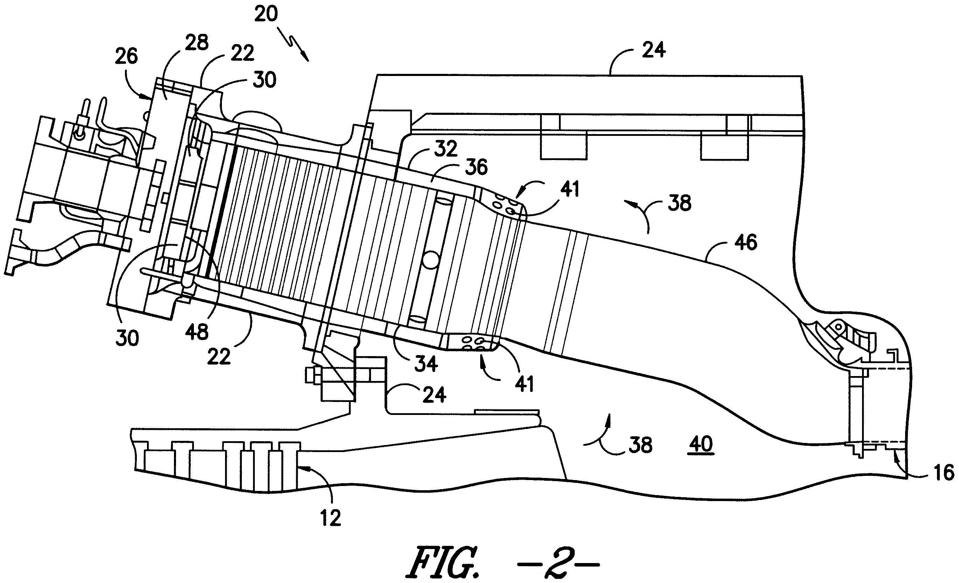

Referring now to the drawings, FIG. 1 illustrates a simplified, block diagram of one embodiment of a gas turbine 10. The gas turbine 10 includes a compressor section 12, a combustion section 14, and a turbine section 16. The combustion section 14 may include a plurality of combustors 20 (one of which is illustrated in FIG. 2) disposed around an annular array about the axis of the gas turbine 10. The compressor section 12 and turbine section 16 may be coupled by a shaft 18. The shaft 18 may be a single shaft or a plurality of shaft segments coupled together to form the shaft I8. During operation of the gas turbine 10, the compressor section 12 pressurizes fluid and directs the pressurized fluid towards the combustion section 14. Within each combustor 20 (FIG. 2) of the combustion section 14, fuel is mixed with the pressurized fluid and burned. The hot gases of combustion then flow from the combustion section 14 to the turbine section 16, wherein energy is extracted from the hot gases to produce work. Referring to FIG. 2, a cross-sectional side view of one embodiment of a combustor 20 is illustrated. The combustor 20 generally includes a substantially cylindrical combustion casing 22 secured to a portion of a gas turbine casing 24, such as a compressor discharge casing or a combustion wrapper casing. Additionally, an end cover assembly 26 may be secured to an upstream end of the combustion casing 22. The end cover assembly 26 may include an end cover 28 and a plurality of fuel nozzles 30 secured to the end cover 28. Each fuel nozzle 30 may be configured to intake fuel from a fuel source (not shown), mix the fuel with outer suitable fluids and distribute the mixture downstream for combustion. The end cover assembly 26 may also include a plurality of tubes, manifolds, associated valves and the like for feeding fuel (e.g., gaseous fuel and/or liquid fuel) air, water and/or other suitable fluids into the fuel nozzles 30.

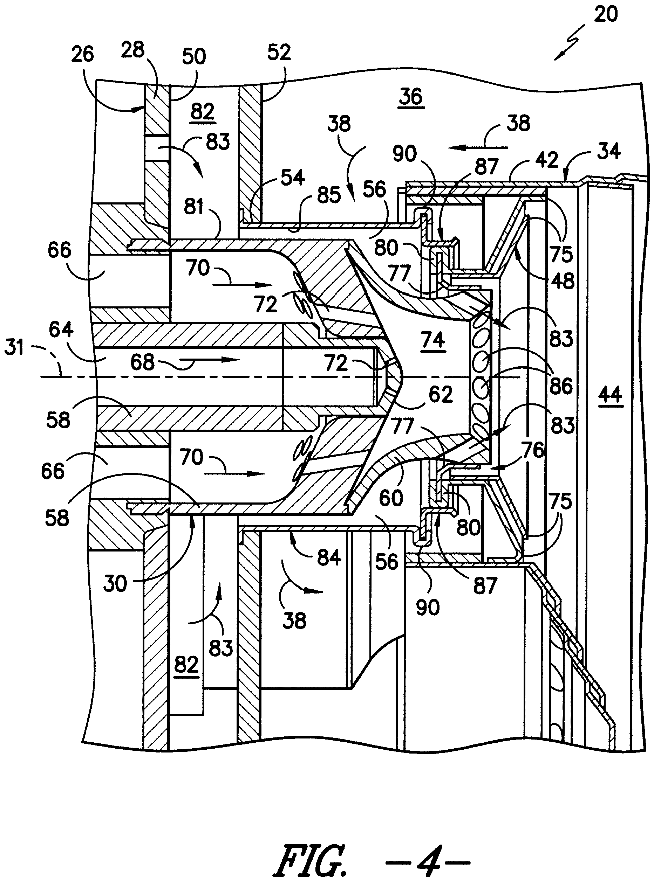

Each combustor 20 may also include a flow sleeve 32 and a combustion liner 34 substantially concentrically arranged within the flow sleeve 32. As such, a radial space 36 may generally be defined between the flow sleeve 32 and the combustion liner 34 for directing the compressor discharge fluid 38 (indicated by the arrows) flowing within an annular plenum 40 defined by the turbine casing 24 along the combustion liner 34. For example, the flow sleeve 32 may define a plurality of holes 41 configured to permit the compressor discharge fluid 38 to enter the radial space 36 and flow upstream along the combustion liner 34 toward the fuel nozzles 30. Additionally, the combustion liner 34 may generally define a substantially cylindrical combustion chamber 44 (FIG. 4) downstream of the fuel nozzles 30, wherein the fuel and other fluids mixed within the fuel nozzles 30 are injected and combusted to produce hot gases of combustion. Further, the downstream end of the combustion liner 34 may generally be coupled to a transition piece 46 extending to a first stage nozzle (not shown) of the turbine section 16 (FIG. 1). As such, the combustion liner 34 and transition piece 46 may generally define a flowpath for the hot gases of combustion flowing from the combustor 20 to the turbine section 16.

The combustor 20 may also include a combustion liner cap 48 attached to the upstream end of the combustion liner 34. For example, in several embodiments, the combustion liner cap 48 may be secured along the inner perimeter of the combustion liner 34 in order to seal the hot gases of combustion within the liner 34. As such, the combustion liner cap 48 may generally serve to shield or protect the upstream components of the combustor 20 (e.g., the end cover assembly 26) from the hot gases of combustion generated within the combustion chamber 44. Additionally, as will be described below, a portion of each fuel nozzle 30 may extend through the combustion liner cap 48 (e.g., through a plurality of openings 76 (one of which is shown in FIG. 4) defined by the liner cap 48) to permit the fuel and other fluids directed through the fuel nozzles 30 to be injected into the combustion chamber 44.

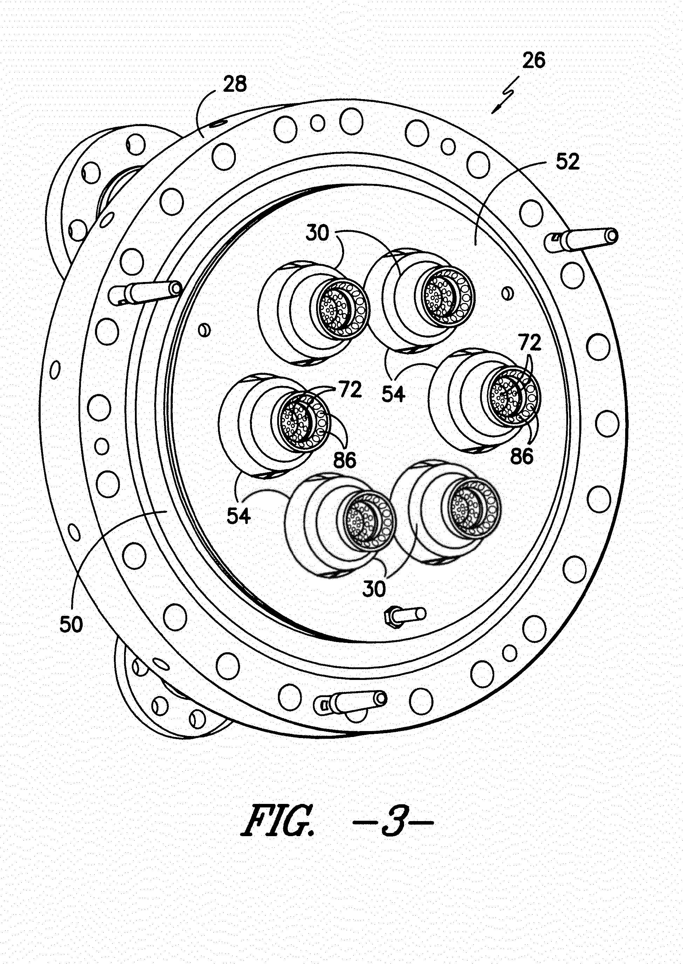

Referring now to FIG. 3, there is illustrated a perspective view of one embodiment of the end cover assembly 26 of the combustor 20. As shown, the end cover assembly 26 generally includes the end cover 28 of the combustor 20, with the combustor's fuel nozzles 30 being attached thereto. For example, in the illustrated embodiment, six fuel nozzles 30 may extend from an inner surface 50 of the end cover 28, with the nozzles 30 being disposed in a circular array about the central axis of the end cover 28. However, any suitable number and arrangement of fuel nozzles 30 may be attached to the end cover 28 and may extend outwardly from the inner surface 50.

The end cover assembly 26 may also include a baffle plate 52 attached to the end cover 28. For example, the baffle plate 52 may be attached to the end cover 28 using a plurality of bolts and risers. However, in other embodiments, the baffle plate 52 may be attached to the end cover 28 using any other suitable means. The baffle plate 52 may generally define a plurality of baffle openings 54 for receiving the fuel nozzles 30. For instance, in the illustrated embodiment, the baffle plate 52 includes six baffle openings 54 to permit each of the fuel nozzles 30 attached to the end cover 28 to extend through the baffle plate 52.

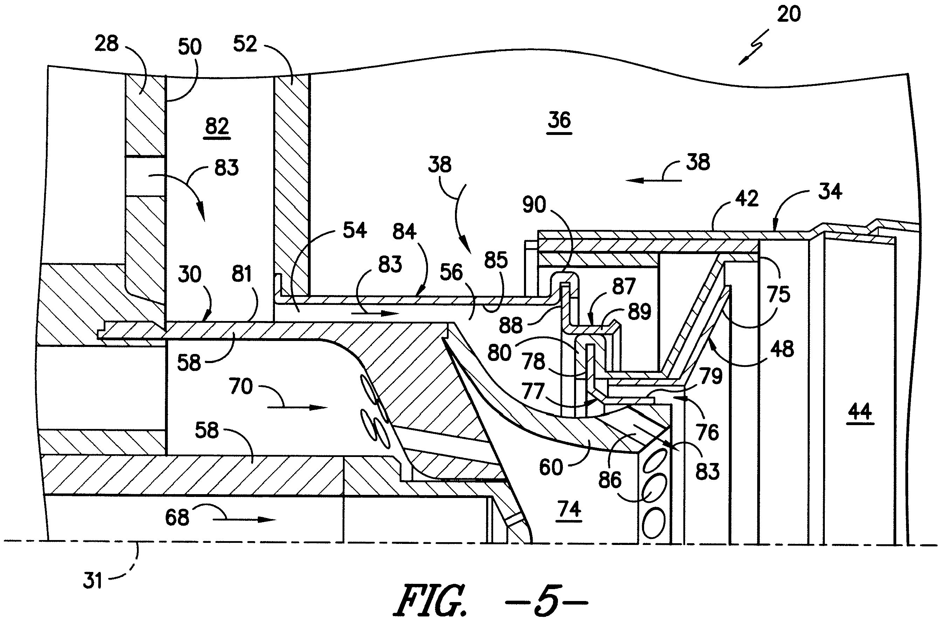

Referring now to FIGS. 4 and 5, there is illustrated one embodiment of the combustor 20 having a fluid passage 56 sealed from the compressor discharge fluid 38 flowing through the combustor 20 in accordance with aspects of the present subject matter. In particular, FIG. 4 illustrates a partial, cross-sectional view of the combustor 20 shown in FIG. 2. Additionally, FIG. 5 illustrates a cross-sectional view of a portion of the combustor shown in FIG. 4, particularly taken along a centerline 31 of one of the fuel nozzles 30 of the combustor 20.

As shown, each fuel nozzle 30 of the combustor 20 may generally include a cylindrical base portion 58 and a radial collar 60 extending from the base portion 58. The base portion 58 may generally be configured to be attached to a portion of the end cover assembly 26 (e.g., the end cover 28) at one end and may include a nozzle tip 62 at an opposing end. Additionally, the base portion 58 may include one or more fluid chambers 64, 66 configured to receive the fuel, air and/or other fluids supplied to the fuel nozzle 30 through the end cover 28. For example, in several embodiments, the base portion 58 may include an inner fluid chamber 64 generally concentrically arranged within an outer fluid chamber 66. As indicated by the arrows, the inner fluid chamber 64 may be configured to receive a first fluid 68 and the outer chamber 66 configured to receive a second fluid 70. The base portion 58 may also include a plurality of tip openings 72 defined in the nozzle tip 62 (e.g., in two or more annular arrays around the nozzle tip 62) for injecting the first and second fluids 68, 70 into a mixing chamber 74 defmed by the radial collar 60. The fluids 68, 70 injected into the mixing chamber 74 may then be mixed and expelled from the fuel nozzle 30 into the combustion chamber 44 for combustion therein.

It should be appreciated that the fluids 68, 70 supplied to fuel nozzle 30 may generally comprise any suitable fluids and/or combination of fluids known in the art. For example, the fluids 68, 70 may comprise any suitable fuels (e.g., gaseous fuels, liquid fuels, and/or combinations of gaseous and/or liquid fuels), air, water, steam and/or other suitable gases and/or liquids. However, in several embodiments of the present subject matter, the first fluid 68 may comprise natural gas and the second fluid 70 may comprise an inert carbon dioxide containing gas, such as air and other suitable gases.

As shown in FIGS. 4 and 5, the downstream end of each fuel nozzle 30 may generally be configured to be received within a portion of the combustion liner cap 48. For example, the combustion liner cap 48 may include one or more walls and/or plates 75 (e.g., a cap plate and a splash plate) extending generally radially and axially from the inner perimeter of the combustion liner 34, with the walls and/or plates 75 defining openings 76 for receiving the radial collar 60 of each fuel nozzle 30. Additionally, in several embodiments, the combustion liner cap 48 may be configured to be in sealing engagement with each fuel nozzle 30. Thus, it should be appreciated that a suitable sealing mechanism may be disposed between the combustion liner cap 48 and each fuel nozzle 30 to provide a suitable seal between such components. For instance, in the illustrated embodiment, a floating collar 77 may be coupled between the combustion liner cap 48 and the radial collar 60. As particularly shown in FIG. 5, the floating collar 77 may include a first end defining a generally radially extending collar portion 78 and a second end defining a generally axially extending flange portion 79. The collar portion 78 may generally be configured to be received within a radially extending channel 80 defined by a portion of the combustion liner cap 48. For example, an upstream end of one of the walls and/or plates 75 of the combustion liner cap 48 may include a radially outwardly extending projection defining the annular channel 80. The channel 80 may generally be dimensioned or otherwise configured such that the collar portion 78 may move or slide radially within the channel 80. As such, the radial positioning of the floating collar 77 relative to the combustion liner cap 48 may be adjusted to accommodate any misalignments between the liner cap 48 and the fuel nozzles 30. Additionally, due to the pressure acting on the floating collar 77 during operation of the combustor 20, the collar portion 78 may be pressed into sealing engagement with one of the sidewalls of the channel 80, thereby providing a seal between the floating collar 77 and the combustion liner cap 48. Similarly, the flange portion 79 of the floating collar 77 may generally be configured to be in sealing engagement with the fuel nozzle 30. For example, in one embodiment, the flange portion 79 may be configured to be frictionally engaged around the outer perimeter of the radial collar 60 (e.g., by using a friction-fit, such as a press-fit or interference-fit, between the radial collar 60 and the flange portion 79) to seal the flange portion 79 to the fuel nozzle 30. Accordingly, the floating collar 77 may generally serve as a sealing mechanism for sealing the gap defined between the combustion liner cap 48 and the fuel nozzle 30.

It should be readily appreciated by those of ordinary skill in the art that the floating collar 77 need not have the exact configuration described above, but may generally have any suitable configuration that provides a seal between the combustion liner cap 48 and each fuel nozzle 30. Additionally, it should be appreciated that, in alternative embodiments, any other suitable sealing mechanism known in the art may be utilized to provide a seal between the combustion liner cap 48 and each fuel nozzle 30. For example, suitable sealing mechanisms may include, but are not limited to, piston ring seals, O-ring seals, face seals, brush seals, labyrinth seals, friction seals, floating seals, slip joints, compression seals, gasket seals and other suitable seals and sealing devices. Moreover, various other attachment methods may be utilized to provide a seal between the combustion liner cap 48 and each fuel nozzle 30. For example, a friction-fit, such as a press-fit or interference-fit, may be utilized to attach the combustion liner cap 48 around the outer perimeter of each fuel nozzle 30. Similarly, the combustion liner cap 48 may be welded around the outer perimeter of each fuel nozzle 30 in order to provide for sealing engagement between the liner cap 48 and the fuel nozzles 30.

Further, as indicated above, a portion of each fuel nozzle 30 may generally extend through the baffle plate 52 attached to the end cover 28. For example, in the illustrated embodiment, the fuel nozzle 30 may extend through one of the baffle openings 54 defmed in the baffle plate 52, with the outer surface 81 of the fuel nozzle 30 be spaced radially apart from the outer perimeter of the baffle opening 54 such that a radial space or gap is defined between the fuel nozzle 20 and the baffle plate 52. Additionally, as shown in FIG. 4, the baffle plate 52 may generally be spaced apart from the end cover 28 such that a plenum 82 is defined between the end cover 28 and the baffle plate 52. The plenum 82 may generally be in flow communication with a fluid source (not shown) to allow a secondary fluid 83 to be supplied into the plenum 82. Thus, as indicated by the arrows, a secondary fluid 83 may be received within the plenum 82 and may be directed through the gap defined between the baffle plate 52 and the fuel nozzle 30.

It should be appreciated that the secondary fluid 83 may generally comprise any suitable fluid and/or combination of fluids known in the art. For example, the secondary fluid 83 may comprise any suitable fuels (e.g., gaseous fuels, liquid fuels and/or any combinations of gaseous and/or liquid fuels), air, water, steam and/or any other suitable gases and/or liquids. However, in several embodiments of the present subject matter, the secondary fluid 83 may comprise an oxygen containing gas having a differing composition than the compressor discharge fluid 38. For example, in a particular embodiment, the secondary fluid 83 may comprise pure oxygen or any other suitable fluid having an oxygen content greater than the oxygen content of the compressor discharge fluid 38. In an alternative embodiment, the secondary fluid 83 may comprise a fluid having an oxygen content less than the oxygen content of the compressor discharge fluid 38.

Referring still to FIG. 4, in several embodiments, the combustor 20 may also include an annular shroud 84 extending from the baffle plate 52 at or adjacent to each baffle opening 54. In general, the upstream end of the shroud 84 may be configured to be rigidly attached to a portion of the baffle plate 52. For example, the shroud 84 may be secured to the baffle plate 52 by welding, brazing, using one or more mechanical fasteners (e.g., bolts, screws, pins, clips, brackets and the like) and/or using any other suitable attachment means and/or method. Additionally, the shroud 84 may extend downstream of the baffle plate 52 in the direction of the combustion liner cap 48. As such, the shroud 84 may generally encase or surround at least a portion of the fuel nozzle 30. For instance, as shown, the shroud 84 may be spaced apart radially from the fuel nozzle 30 such that a fluid passage 56 is defmed between an inner surface 85 of the shroud 84 and the outer surface 81 of the fuel nozzle 30. Accordingly, the secondary fluid 83 supplied to the plenum 82 may be directed into the fluid passage 56 for subsequent introduction into the fluids 68, 70 flowing through and/or exiting the fuel nozzle 30.

For example, in several embodiments of the present subject matter, the fuel nozzle 30 may include a plurality of fluid openings 86 for injecting the secondary fluid 83 flowing through the passage 56 into the stream of fluids 68, 70 exiting the fuel nozzle 30. Thus, as shown in the illustrated embodiment, a plurality of fluid openings 86 may be formed along a portion of the radial collar 60 of the fuel nozzle 30 (e.g., the annular wall or circumferential portion of the radial collar 60). As such, the fluid openings 86 may generally define an annular arrangement for injecting the secondary fluid 83 into the fluids 68, 70 discharged from the fuel nozzle 30. However, it should be appreciated that, in alternative embodiments, the fluid openings 83 may be defined in the fuel nozzle 30 at any other suitable location and may have any suitable arrangement that allows the secondary fluid 83 to be introduced into and/or mixed with one or more of the fluids 68, 70 supplied through and/or exiting the fuel nozzle 30. For instance, in another embodiment, the fluid openings 83 may be defmed in the fuel nozzle 30 (e.g., through the base portion 58 of the fuel nozzle 30) such that the secondary fluid 83 is directed into the mixing chamber 74 defined by the radial collar 60. In other embodiments, the fluid openings 83 may be defined in the fuel nozzle 30 such that the secondary fluid 83 is directed into the outer fluid chamber 66 of the fuel nozzle 30.

It should be appreciated by those of ordinary skill in the art that, by positioning the fluid openings 86 at the downstream end of the fuel nozzle 30, the likelihood of flashback and flame holding events occurring due to the introduction of the secondary fluid 83 may be reduced. For example, in the illustrated embodiment, the fluid passages 86 are defined in the fuel nozzle 30 so that the secondary fluid 83 is introduced into the fluids 68, 70 flowing through the fuel nozzle 30 as such fluids 68, 70 enter the combustion chamber 44. Accordingly, the secondary fluid 83 may be combusted at a location exterior of the fuel nozzle 30, thereby maintaining the combustor's flame downstream of the fuel nozzle exit.

Referring still to FIGS. 4 and 5, to prevent the secondary fluid 83 from becoming diluted by the compressor discharge fluid 38 flowing within the combustor 20, the combustor 20 may also include a means for sealing the fluid passage 56 from the compressor discharge fluid 38. Specifically, as indicated above, the compressor discharge fluid 38 may generally be directed into the radial space 36 defined between the flow sleeve 32 and combustion liner 34 for flow upstream towards the fuel nozzles 30. Thus, as indicated by the arrows in FIGS. 4 and 5, the compressor discharge fluid 38 is generally directed upstream along the outer surface 42 of the combustion liner 34 and may flow around the liner 34 in the direction of the fuel nozzles 30, the combustion liner cap 48 and the shroud 84. Accordingly, in several embodiments of the present subject matter, the combustor 20 may include a sealing mechanism configured to seal the disclosed shroud 84 to a component of the combustor 20 in order to prevent the compressor discharge fluid 38 flowing along and around the combustion liner 34 from entering the fluid passage 56 and thereby diluting the secondary fluid 83.

For example, as particularly shown in FIG. 5, the sealing mechanism may comprise a second floating collar 87 coupled between the shroud 84 and a portion of the combustion liner cap 48. Similar to the floating collar 77 described above, the additional floating collar 87 may include a first end defining a generally radially extending collar portion 88 and a second end defining a generally axially extending flange portion 89. The collar portion 88 may generally be configured to be received within a radially extending channel 90 defined by a portion of the shroud 84. For instance, as shown, the downstream end of the shroud 84 may include a radial projection defining the annular channel 90. The channel 90 may generally be dimensioned or otherwise configured such that the collar portion 88 may move or slide radially within the channel 90. As such, the radial positioning of the floating collar 87 relative to the shroud 84 may be adjusted to accommodate any misalignments between the baffle plate/shroud 52, 84 and the combustion liner cap 48. Additionally, due to the operating pressures within the combustor 20, the collar portion 88 may be pressed into sealing engagement with one of the sidewalls of the channel 90, thereby providing a seal between the collar portion 88 and the shroud 84. Similarly, the flange portion 89 of the floating collar 87 may generally be configured to be in sealing engagement with the combustion liner cap 48. For example, in one embodiment, the flange portion 89 may be configured to be frictionally engaged around the outer perimeter of the annular channel 90 defined by the combustion liner cap 48 in order to seal the flange portion 89 to the liner cap 48. Accordingly, the floating collar 87 may generally seal the gap defined between the shroud 84 and the combustion liner cap 48, thereby preventing the compressor discharge fluid 38 from entering the fluid passage 56. As such, all of the undiluted secondary fluid 83 may be directed through the fluid openings 86 and may be introduced into the fluids 68, 70 flowing through and/or exiting the fuel nozzle 30.

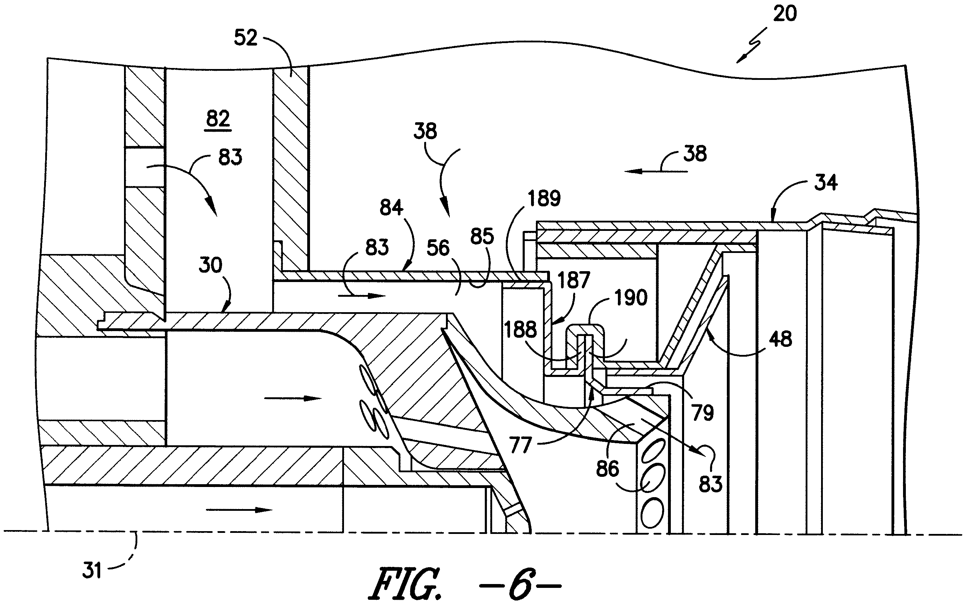

Referring now to FIG. 6, there is illustrated a partial, cross-sectional view (taken along the centerline 31 of one of the fuel nozzles 30) of another embodiment of a sealing mechanism 187 suitable for use with the disclosed combustor 20 in accordance with aspects of the present subject matter. Similar to the embodiment described above, the sealing mechanism 187 may comprise a floating collar 187 coupled between the shroud 84 and a portion of the combustion liner cap 48, with the floating collar 187 including a first end defining a generally radially extending collar portion 188 and a second end defining a generally axially extending flange portion 189. However, unlike the collar portion 88 described above with reference to FIGS. 4 and 5, the collar portion 188 may be configured to be received within a radially extending channel 190 defined by the combustion liner cap 48. For example, as shown, the collar portion 188 (hereinafter referred to as the "first collar portion 188") may be configured to be received within the same annular channel 190 as the collar portion 78 of the floating collar 77 utilized to seal the gap defined between combustion liner cap 48 and the fuel nozzle 30 (hereinafter referred to as the "second collar portion 78"). As such, the first collar portion 188 may generally be configured to move or slide radially relative to the channel 190 and/or the second collar portion 78 in order to accommodate misalignments between the baffle plate/shroud 52, 84 and the combustion liner cap 48. Additionally, due to the operating pressures of the combustor 20, the first collar portion 188 may be pressed into sealing engagement with a sidewall of the channel 190 and/or the second collar portion 78, thereby providing a seal between the first collar portion 188 and the combustion liner cap 48. Similarly, unlike the flange portion 89 described above, the flange portion 189 may be configured to be in sealing engagement with a portion of the shroud 84. For example, the flange portion 189 may be frictionally engaged with the inner surface 85 of the shroud 84. Accordingly, a seal may be provided between the shroud 84 and the combustion liner cap 48 to prevent the compressor discharge fluid 38 from entering the fluid passage 56.

It should be appreciated that, in alternative embodiments, the first and second collar portions 188, 78 need not be disposed within the same annular channel 190. For instance, in one embodiment, two annular channels (not shown) may be defined by the combustion liner cap 48 to permit each collar portion 188, 78 to move or slide radially within its own channel.

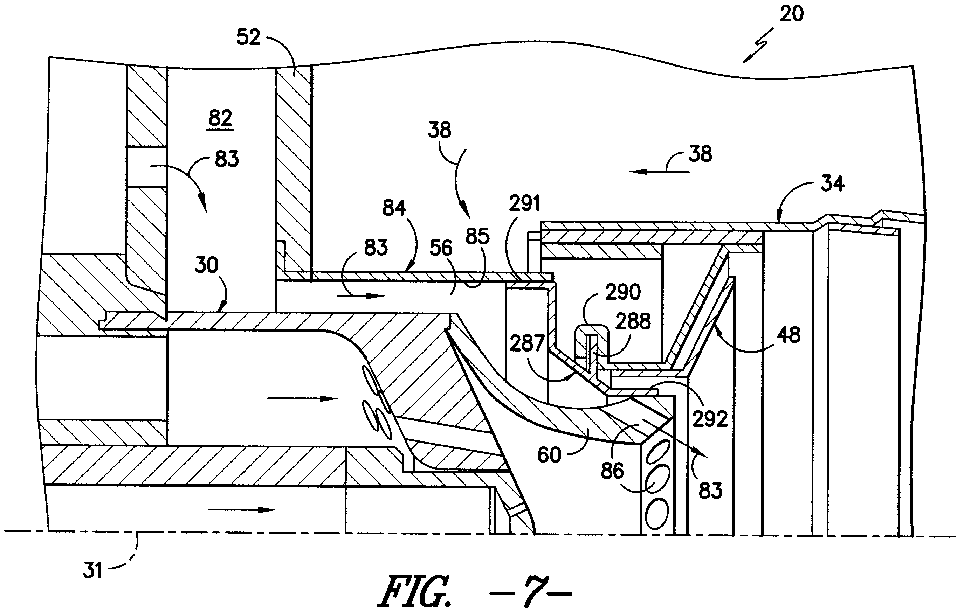

Referring now to FIG. 7, there is illustrated a partial, cross-sectional view (taken along the centerline 31 of one of the fuel nozzles 30) of a further embodiment of a sealing mechanism 287 suitable for use with the disclosed combustor 20 in accordance with aspects of the present subject matter. Unlike the embodiments described above, the sealing mechanism 287 may comprise a floating collar 287 coupled between the shroud 84 and a portion of the fuel nozzle 30. In general, the floating collar 287 may comprise a combination of the floating collars 187, 77 described above with reference to FIGS. 4-6 and, thus, may be configured to seal the gap defined between the shroud 84 and the combustion liner cap 48 and also the gap defined between the combustion liner cap 48 and the fuel nozzle 30. As shown, the floating collar 287 may include a first end defining a generally axially extending first flange portion 291 and a second end defining a generally axially extending second flange portion 292, with a radially extending collar portion 288 being disposed between the first and second flange portions 291, 292. The flange portions 291, 292 may generally be configured to be in sealing engagement with portions of the shroud 83 and the fuel nozzle 30, respectively. For example, in the illustrated embodiment, the first flange portion 281 may be in sealing engagement with the inner surface 85 of the shroud 84 (e.g., by using a friction fit) and the second flange portion 292 may be in sealing engagement with the radial collar 60 of the fuel nozzle 30 (e.g., by using a friction fit). Additionally, the collar portion 288 of the floating collar 287 may be configured to be received within a radially extending channel 290 defined by the combustion liner cap 48. As such, the collar portion 288 may move or slide radially within the channel 290 in order to accommodate misalignments between the baffle plate/shroud 52, 84, the combustion liner cap 48 and/or the fuel nozzle 30 and may also seal against one of the sidewalls of the channel 290 during operation of the combustor 20.

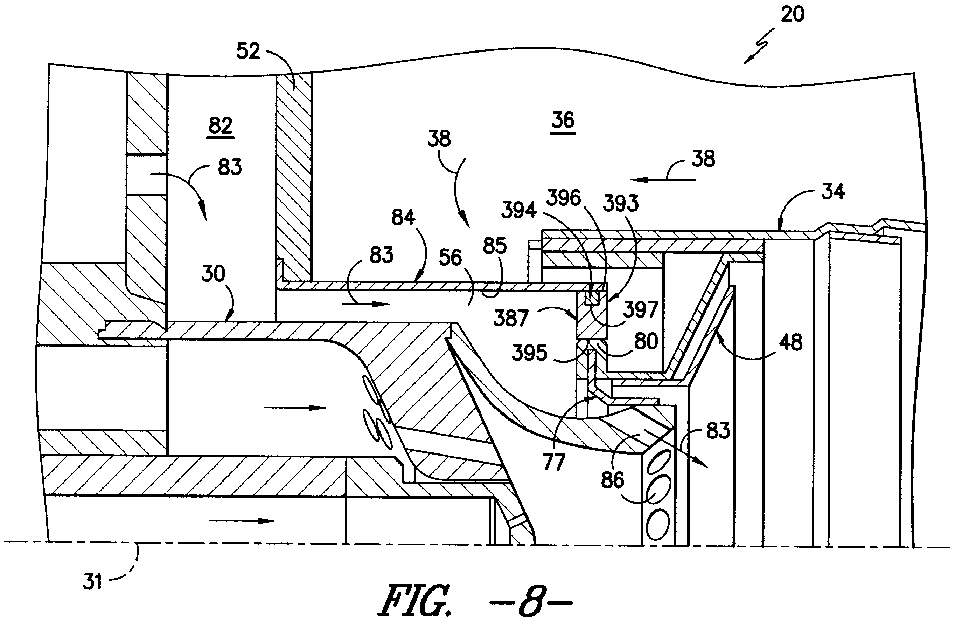

Referring now to FIG. 8, there is illustrated a partial, cross-sectional view (taken along the centerline 31 of one of the fuel nozzles 30) of yet another embodiment of a sealing mechanism 387 suitable for use with the disclosed combustor 20 in accordance with aspects of the present subject matter. As shown, the sealing mechanism 387 generally comprises an annular body or ring 393 and a corresponding ring seal 394, such as a piston ring seal, an O-ring seal and the like, for providing a seal between the ring 393 and a component of the combustor 20. In general, the ring 393 may be configured to extend radially between the shroud 84 and a portion of the combustion liner cap 48. For example, in the illustrated embodiment, the ring 393 may include a first end 395 rigidly attached (e.g., by welding) to the outer perimeter of the annular channel 80 defined by the combustion liner cap 48 and a second end 396 engaging the inner surface 85 of the shroud 84. Additionally, to accommodate the ring seal 394, an annular seal groove 397 may be defined in the second end 396 of the ring 393. As such, the ring seal 394 may be configured to seal the interface defined between the ring 393 and the shroud 84, thereby sealing the fluid passage 56 from the compressor discharge fluid 38 flowing adjacent to the outer perimeter of the shroud 84.

It should be appreciated that, in alternative embodiments, the disclosed ring 393 and ring seal 394 may have any other suitable configuration that permits the fluid passage 56 to be sealed from the compressor discharge fluid 38. Thus, in one embodiment, the ring seal 394 may be disposed between the ring 393 and the combustion liner cap 48. For example, the second end 396 of the ring 393 may be rigidly attached to the inner surface 85 of the shroud 84 and the first end 395 of the ring 393 may define an annular seal groove 397 for accommodating the ring seal 394 at the interface between the ring 393 and the combustion liner cap 48. In another embodiment, annular seal grooves 397 may be defmed in each end 395, 396 of the ring 393 such that a ring seal 394 may be disposed at the interface between the ring 393 and the shroud 84 and at the interface of the ring 393 and the combustion liner cap 48. In a further embodiment, the ring 393 may be rigidly attached between the combustion liner cap 48 and the shroud 84 in order to seal the fluid passage 56. For instance, the first end 395 of the ring 393 may be welded to the combustion liner cap 48 and the second end 396 of the ring 393 may be welded to the shroud 84 to provide for sealing engagement between the combustion liner cap 48 and the shroud 84.

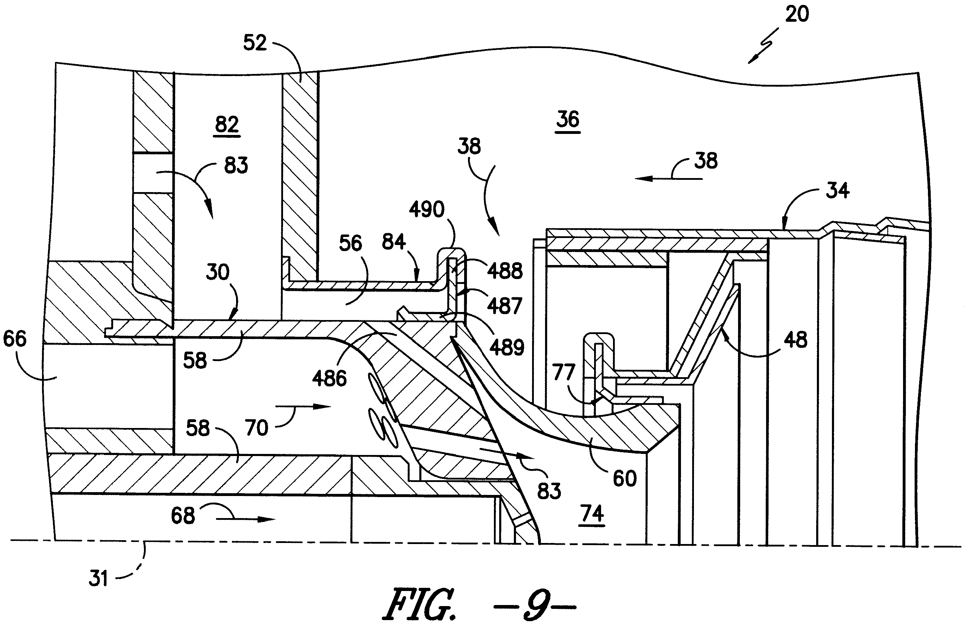

Referring now to FIG. 9, there is illustrated a partial, cross-sectional view (taken along the centerline 31 of one of the fuel nozzles 30) of yet another embodiment of a sealing mechanism 487 suitable for use with the disclosed combustor 20 in accordance with aspects of the present subject matter. As shown, the sealing mechanism 487 comprises a floating collar 487 coupled between the shroud 84 and a portion of the fuel nozzle 30. Similar to embodiments described above, the floating collar 487 may include a first end defming a generally radially extending collar portion 488 and a second end defming a generally axially extending flange portion 489. The collar portion 488 may generally be configured to be received within a radially extending channel 490 defined by the shroud 84 and may be configured to move or slide radially within the annular channel 490 in order to accommodate misalignments between the baffle plate/shroud 52, 84 and the fuel nozzle 30. Additionally, during operation of the combustor 20, the collar portion 488 may be pressed into sealing engagement with one of the sidewalls of the channel 490. Similarly, the flange portion 489 of the floating collar 487 may generally be configured to be in sealing engagement with a portion of the fuel nozzle 30. For example, the flange portion 489 may be in sealing engagement with the base portion 58 of the fuel nozzle 30. However, in another embodiment, the flange portion 489 may be in sealing engagement with a portion of the radial collar 60. For instance, the flange portion 489 may be engaged with the downstream end of the radial collar 60 similar to the second flange portion 292 described above with reference to FIG. 7.

In an alternative embodiment, the sealing mechanism 487 may comprise a ring and a ring seal (not shown) configured the same as or similar to the ring 393 and ring seal 394 described above with reference to FIG. 8. For example, a radially extending ring may be attached at one end to the shroud 84 or the fuel nozzle 30 and may defme an annular seal groove (not shown) at the opposing end to accommodate a ring seal for sealing the ring to the shroud 84 or fuel nozzle 30. In another embodiment, the ring may define annular seal grooves at each of its ends to allow a ring seal to be disposed at the interface between the shroud 84 and the ring and the interface between the ring and the fuel nozzle 30.

It should be appreciated that, when a sealing mechanism 487 is disposed between the shroud 84 and the fuel nozzle 30, the fluid openings 486 into the which the secondary fluid 83 is directed may generally be defined at any suitable location upstream of the position at which the sealing mechanism 487 engages the fuel nozzle 30. For example, in the illustrated embodiment, the fluid passages 486 are defmed in the base portion 58 of the fuel nozzle 30 upstream of the flange portion 489 of the floating collar 487. As such, the secondary fluid 83 may be directed into the mixing chamber 74 of the fuel nozzle 30 and may be premixed with the first and second fluids 68, 70 prior to such fluids 68, 70 exiting the fuel nozzle 30. However, in another embodiment, the fluid passages 486 may be defined in the fuel nozzle 30 such that the secondary fluid 83 is directed into the outer fluid chamber 66 and is mixed with the second fluid 70 prior to being injected into the mixing chamber 74. In a further embodiment, the sealing mechanism 487 may be disposed further downstream along the fuel nozzle 30. For instance, the sealing mechanism 487 may be configured to engage the fuel nozzle 30 at the downstream end of the radial collar 60. In such an embodiment, similar to the fluid passages 86 described above with reference to FIGS. 4 and 5, the fluid passages 486 may be defmed along the outer perimeter of the radial collar 60 to permit the secondary fluid 83 to be injected into the fluids 68, 70 exiting the fuel nozzle 30.

Additionally, it should be readily appreciated by those of ordinary skill in the art that the disclosed floating collar seals 87, 187, 287, 487, ring seals 394 and the corresponding combustor components need not have the exact configurations as described above with reference to FIGS. 4-9, but may generally have any suitable configuration that permits the fluid passage 56 defined between the shroud 84 and the fuel nozzle 30 to be sealed from the compressor discharge fluid 38. It should also be appreciated that various other suitable means may be utilized to seal the disclosed passage 56 from the flow of compressor discharge fluid 38. For example, in addition to floating collar seals 87, 187, 287, 487 and ring seals 394, various other sealing mechanisms may be utilized to seal the fluid passage 56. For example, suitable sealing mechanisms may include, but are not limited to, piston ring seals, O-ring seals, face seals, brush seals, labyrinth seals, friction seals, floating seals, slip joints, compression seals, gasket seals and other suitable seals and sealing devices. Moreover, various other attachment methods may be utilized to provide a seal between the shroud 84 and the various components of the combustor 20. For example, a friction-fit, such as a press-fit or interference-fit, may be utilized to attach the shroud 84 to a portion of the fuel nozzle 30, the combustion liner cap 48, any components extending from the fuel nozzle 30 and/or combustion liner cap 48 and/or or any other component(s) of the combustor 20 so as to provide for sealing engagement between the shroud 84 and such component(s). Similarly, the shroud 84 may be welded to a portion of the fuel nozzle 30, the combustion liner cap 48, any components extending from the fuel nozzle 30 and/or combustion liner cap 48 and/or or any other component(s) of the combustor 20 in order to permit the fluid passage 56 to be sealed from the flow of compressor discharge fluid 38. For instance, in the embodiment shown in FIG. 7, the first and second flange portions 291, 292 of the floating collar 287 may simply be welded to the shroud 84 and fuel nozzle 30, respectively, to provide a seal between the floating collar 287 and such components.

It should also be appreciated that, although the present subject matter has been described as sealing the fluid passage 56 from the compressor discharge fluid 38 flowing through the combustor 20, the present disclosure may also be utilized to seal the fluid passage 56 from any other fluid that may be flowing around and/or adjacent to the shroud 84, the combustion liner cap 48 and/or the fuel nozzles 30.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A combustor (20) comprising:
a baffle plate (52) defining an opening (54);
a fuel nozzle (30) extending through said opening (54), said fuel nozzle (30) defining an outer surface (81);
a shroud (84) extending from said baffle plate (52) and surrounding at least a portion of said fuel nozzle (30), said shroud (84) and said outer surface (81) of said fuel nozzle (30) defining a passage (56) for receiving a first fluid (68); and
means for sealing said passage (56) from a second fluid (70) flowing adjacent to said shroud (84).

2. The combustor (20) of claim 1, further comprising a combustion liner cap (48) spaced apart from said baffle plate (52), wherein said means for sealing said passage from said second fluid (70) comprises a seal disposed between said shroud (84) and said combustion liner cap (48).

3. The combustor (20) of claim 2, further comprising a channel (90) defined by one of said shroud (84) and said combustion liner cap (48), wherein said seal comprises a floating collar (87) including a collar portion (88) configured to be received within said channel (90).

4. The combustor (20) of claim 2 or 3, wherein said seal comprises a ring (393) extending radially between said shroud (84) and said combustion liner cap (48) and a ring seal (394) disposed within a groove (397) defined by said ring (394).

5. The combustor (20) of claim 1, wherein said means for sealing said passage (56) from said second fluid (70) comprises a seal disposed between said shroud (84) and said fuel nozzle (30).

6. The combustor (20) of claim 5, wherein said seal comprises a floating collar (487).

7. The combustor of claim 6, further comprising a channel (490) defined by said shroud (84), wherein said floating collar (487) includes a collar portion (488) configured to be received within said channel (490).

8. The combustor (20) of claim 6 or 7, wherein said floating collar (487) includes a first flange (291) portion engaging a surface of said shroud (84) and a second flange (292) portion engaging said outer surface (81) of said fuel nozzle (30).

9. The combustor (20) of any preceding claim, further comprising a plurality of fluid openings (86) defined in said fuel nozzle (30), the first fluid (68) being directed through said plurality of fluid openings (86).

10. The combustor (20) of claim 9, wherein said plurality of fluid openings (86) is defined in said fuel nozzle (30) such that the first fluid (68) is directed into at least one of a mixing chamber (74) of said fuel nozzle (30) and a combustion chamber (44) of the combustor (20).

11. The combustor (20) of claim 2, wherein said seal comprises a radially extending ring (393) and a ring seal (394) disposed within a groove (397) defined by said ring (394).

12. A method for introducing an undiluted fluid into a fuel nozzle (30) of a combustor (20), the method comprising:
supplying a first fluid (68) through a passage (56) defmed between an outer surface (81) of the fuel nozzle (30) and a shroud (84) surrounding at least a portion of the fuel nozzle (30); and
preventing a second fluid (70) flowing adjacent to said shroud (84) from entering said passage (56).

13. The method of claim 12, wherein preventing said second fluid (70) flowing adjacent to said shroud (84) from entering said passage (56) comprises sealing said shroud (84) to at least one of the fuel nozzle (30) and a combustion liner cap (48) of the combustor (20).

14. The method of claim 13, wherein said passage (56) is sealed using at least one of a floating collar (487) and a ring seal (394) coupled to a radially extending ring (393).
